# EUROPEAN PATENT APPLICATION

(11) **EP 1 750 092 A1**
(43) Date of publication of application: **07.02.2007**
(21) Application number: 05739227.6
(22) Date of filing: 13.05.2005
(51) Int. Cl.: G01C 21/32, G08G 1/09

(54) **POSITION INFORMATION RECEPTION DEVICE AND SHAPE MATCHING METHOD**

(30) Priority: 26.05.2004 JP 2004156761
(71) Applicant: MATSUSHITA ELECTRIC INDUSTRIAL CO., LTD., Osaka 571-8501 (JP)
(72) Inventor: SOTA, T. Matsushita Electric Industrial Co., Ltd., Osaka-shi, Osaka 540-6319 (JP); YOSHIDA, S. Matsushita Electric Industrial Co.,Ltd, Osaka-shi, Osaka 540-6319 (JP)
(74) Representative: Grünecker, Kinkeldey, Stockmair & Schwanhäusser Anwaltssozietät
(86) International application number: PCT/JP2005/008773
(87) International publication number: WO 2005/116584

(57) **Abstract**

There is provided a position information reception device capable of reducing the processing load of the shape matching using the shape data indicating a position on the digital map such as a road and a place and rapidly displaying the position. In an on-vehicle terminal (110) having the position information reception device, when a position information reception unit (111) receives road position information from a traffic information center (100), the received road position information is passed to a shape matching unit (112). A map hierarchy selection unit (113) acquires a display scale of the digital map displayed on the screen from a digital map display unit (114), references a scale hierarchy-related storage unit (116), selects a hierarchy of the map database (115) for the shape matching corresponding to the display scale, and outputs it to the shape matching unit (112). The shape matching unit (112) executes a shape matching by using the road shape data among the received road position information and the map data for the shape matching of the hierarchy selected and displays the event position on the digital map display unit (114).

## Description

### Technical Field

The present invention relates to a location information receiving apparatus, such as an in-vehicle navigation device, which receives locations on a digital map, wherein traffic jams or accidents and the like occur, and shape data indicating roads, buildings and the like, as location information for shape matching in traffic information broadcast systems and a shape matching method therefore, and more particularly, to a location information receiving apparatus and a shape matching method capable of displaying or presenting locations on a digital map appropriately and speedily.

### Background Art

Recently, the number of vehicles having navigation devices is increasing rapidly. Navigation systems for use in the vehicle navigation devices hold digital map databases, and based on latitude and longitude data received by a GPS receiver, it is possible to display a map around the current position of the vehicle on a screen or add a running trace or search results to destination route on the map.

However, digital map databases have a disadvantage that scale maps inherently contain errors. The range of errors differs depending on the digital map databaseused. For example, the digital map database with scale map of 1 : 25000 may contain an error of approximately 50 m depending on the location.

The vehicle navigation device receives traffic information, such as information of traffic jams and accidents, provided from a traffic information broadcast system and displays locations of the traffic jams and accidents on a map and performs a route search adding information as the search conditions.

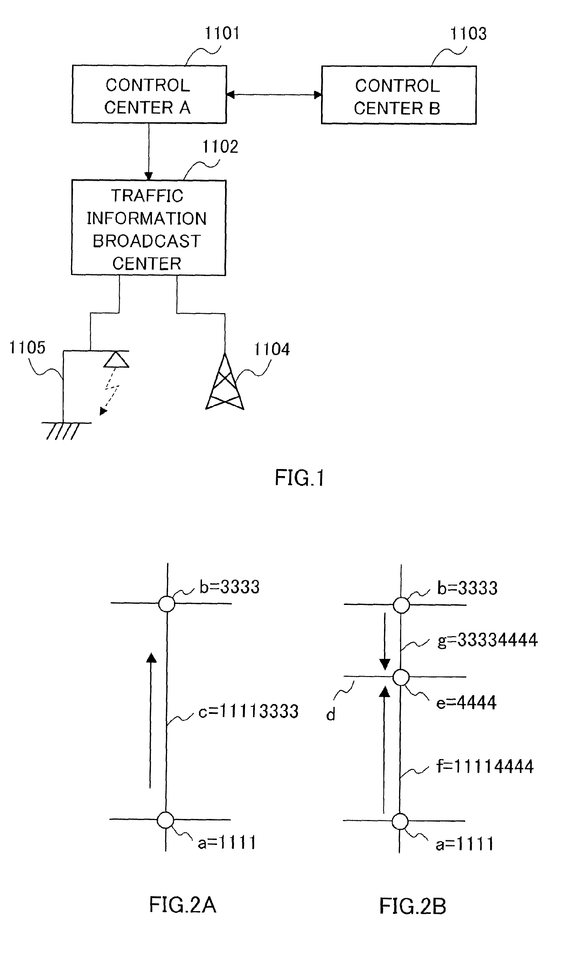

As shown in FIG.1, in the above-mentioned traffic information broadcast system, traffic information is provided in traffic information broadcast center 1102 to control center 1101 controlling an area, and then traffic information edited for each broadcast media (FM broadcast stations, road beacon, mobile phones and the like) is transmitted through each broadcast media. Control center 1101 exchanges traffic information with another control center 1103 of another area, and collects traffic information of a wide area including its surrounding area.

The traffic information broadcast system broadcasts traffic information. For example, traffic information may include latitude and longitude data to indicate locations of traffic jams or accidents. As described above, digital map databases have different errors for each vehicle navigation device, and thus may differ between the sender and receiver of traffic information. In this case, when traffic information is broadcast alone from a traffic information broadcast system, different locations of a traffic accident may be displayed depending on the in-vehicle navigation device that received traffic information.

To improve the inaccuracy of information communication or information display, in-vehicle navigation systems use map information as shown in FIG.2. With reference to FIG.2(a), nodes a and b indicate intersections of a road network, and link c indicates a road between the nodes. Each node sets a unique node number (a=1111, b=3333), and each link sets a unique link number (c=11113333). Digital map databases by the manufacturer contain node and link numbers corresponding to intersections and roads respectively.

In addition, with traffic information indicating traffic jams or accidents, a link number is identified to represent the location of a road, and the point of the road is indicated by the expression such as the number of meters from the starting point of the road indicated by the link number. For example, when traffic information includes "link number=11113333, and 200 m from the starting point of a road", the node number "1111" can be obtained from the link number "11113333" and 200 m can be traced to identify the location on the road, no matter which digital map database is used by in-vehicle navigation devices.

However, when a road b is newly added to the map or the road is changed as shown in FIG.2 (b), then the node and link numbers must be re-assigned accordingly, and when the node and link numbers are changed, digital map databases by manufacturer must also be updated accordingly.

Additions or changes of roads are expected to continue. Thus the conventional road location indication methods have a disadvantage that a lot of work loads and costs must be required to maintain digital map databases for a long time.

To address theseproblems, another method has been proposed where a road is specified by shape matching scheme (also referred as map matching) based on traffic information received from traffic information broadcast system 1102 (see, for example, Patent Document 1 or Patent Document 2).

However, this method has a disadvantage that shape matching depends on the performance of a vehicle navigation device at the receiving end, especially processing performance such as decoder for navigation and the like, thus requiring lowering the shape matching load. The conventional in-vehicle navigation devices mayperformmapmatching approximately once a second since one matching is enough at locations within a limited area (generally approximately several hundred square meters) surrounding the current position of the vehicle. Generally, a traffic information broadcast system handles various kinds of roads such as express ways, national highways, and main prefectural roads, and in urban areas, general prefectural roads and part of city roads, thus increasing the number of roads for shape matching. As a result, shape matching puts a lot of load on in-vehicle navigation devices.

In addition to the existing links, the number of routes for data collection may be increased. Thus, conventional in-vehicle navigation devices have a disadvantage that it takes a lot of time to identify the road by performing shape matching based on the received traffic information and display the traffic information.

To perform display or presentation of road-related information including traffic information speedily, database for shape matching and shape matching apparatus have been proposed (see, Patent Document 3).

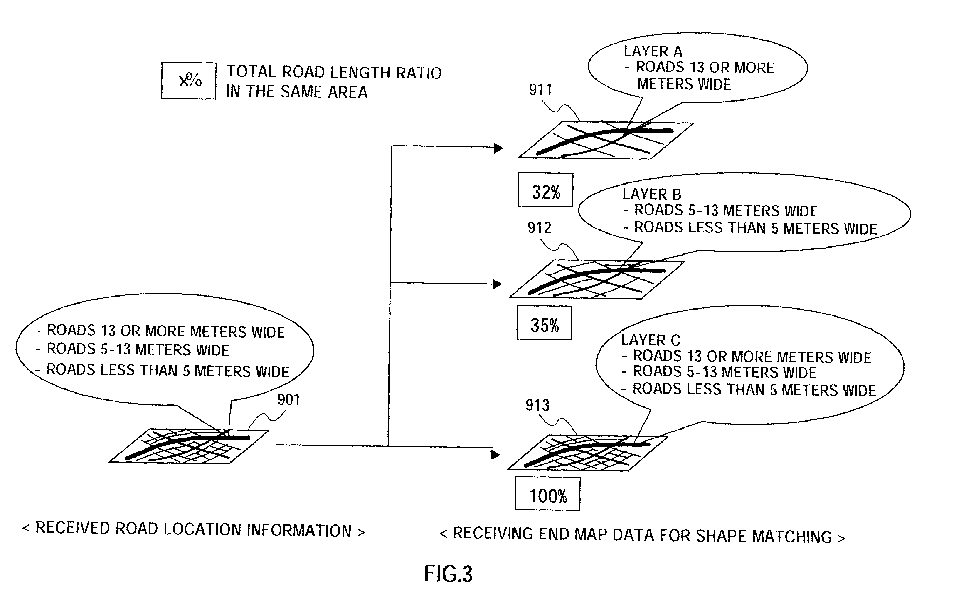

With reference to FIG.3, this shape matching apparatus uses shape matching data composed of three layers: highest layer A has shape matching data 911 including nodes and links indicating the most important roads; second highest layer B has shape matching data 912 including the nodes and links that are classified according to the level of importance into second most important roads as well as the above-mentioned nodes and links; third highest layer C has shape matching data 913. In FIG.3, 901 refers to shape matching data 901 including shape data indicating locations of traffic jams and the like on a digital map. For example, the importance of nodes and links includes road types and road widths. In FIG.3, includes an example of the wider road as more important road. This can narrow the nodes and links and increase the entire processing speed.

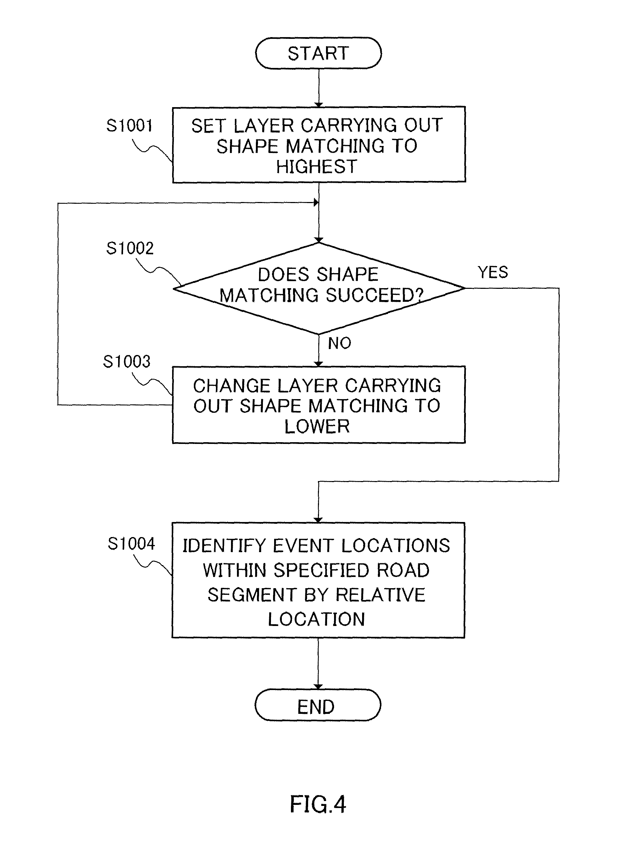

As shown in a flowchart of FIG. 4, this shape matching apparatus uses said layered map databases for shape matching, and performs shape matching starting at the highest layer (S1001). If shape matching succeeds at the highest layer (S1002 "YES"), the shape matching apparatus identifies the event locations within the road segment from the relative location (S1004) and terminates the processing. If shape matching fails at the highest layer (S1002 "No"), the process moves to the next lower layer (S1003), determines whether or not the shape matching succeeds again (S1002), and therefore attempts to identify the road segment while moving to the shape matching target to the lower layer sequentially. This enables the nodes and links for shape matching to narrow and the entire processing speed to increase.
Patent Document 1: Japanese Patent Application Laid-Open No.2001-41757
Patent Document 2: Japanese Patent Application Laid-Open No.2001-66146
Patent Document 3: Japanese Patent Application Laid-Open No.2003-295765

### Disclosure of Invention

### Problems to be Solved by the Invention

The above-mentioned conventional shape matching apparatus has a disadvantage that when shape matching at a higher layer fails, shape matching is executed at a lower layer from the beginning including road shape data that has been succeeded at the higher layer. As a result, the shape matching that has succeeded is wasted, thus increasing the processing time.

In addition, for example, a layer composed of express ways and national highways is matched with road shape data including all road types such as express ways, national highways, main prefectural roads, general roads and narrow streets. This is a waste of time since shape matching is performed for a layer that does not have the corresponding nodes and links. As a result, this increases the processing time.

It is therefore an object of the present invention to provide a location information receiving apparatus and a shape matching method for solving these conventional problems by lowering the shape matching load of shape matching using shape data indicating locations on a digital map such as roads and places where traffic jams and accidents occur while displaying or presenting the above-mentioned locations speedily.

### Means for Solving the Problem

A location information receiving apparatus in accordance with the present invention, which receives shape data indicating locations on a digital map as location information, identifies the locations by performing shape matching between the shape data and map data for shape matching composed of a plurality of layers, and displays the locations on a digital map display section, includes a scale-layer relation storage section for storing the correspondence between a display scale of the digital map to appear on the digital map display section and the layer of map data for shape matching, a map layer selection section for selecting the layer of the map data for shape matching according to the display scale of the digital map to appear on the digital map display section, and a shape matching section for performing shape matching using the map data for shape matching of the selected layer and the shape data.

A shape matching method in accordance with the present invention, which receives shape data indicating locations on a digital map, performs shape matching between the shape data and map data for shape matching composed of a plurality of layers and identifies the locations, includes the steps of selecting the layer of map data for shape matching to be used for shape matching according to a display scale, and performing shape matching using the selected layer of the map data for shape matching and the shape data.

### Advantageous Effect of the Invention

It is an advantage of the present invention to eliminate the need for movement between layers of map data for shape matching by identifying the shape matching layer based on the scale of a map to appear on a display screen before performing shape matching. It is a still further advantage of the present invention to compare values related to shape matching load between the two shape matching data elements so that shape matching is performed only for the matching data elements having a larger value so that shape matching is not performed for the shape matching data elements having a smaller value. As a result, shape matching is not performed for the matching elements having a different importance to reduce redundant matching operations, increase the shape matching speed and display said location speedily.

### Brief Description of Drawings

FIG.1 shows traffic information centers in the conventional technology;
FIG.2 shows nodes and links in the conventional technology;
FIG.3 is a diagram showing a structure for determining the shape matching layer and shape matching method in the conventional technology;
FIG.4 is a flowchart showing shape matching in the conventional technology;
FIG.5 shows a configuration of a traffic information broadcast system in Embodiment 1 of the present invention;
FIG.6 shows road location information received at a vehicle-mounted terminal and layered data stored in a map database for shape matching;
FIG.7 shows a structure of data stored in a scale-layer relation storage section;
FIG.8 is a flowchart showing the operation at a traffic information broadcast center of Embodiment 1 of the present invention;
FIG.9 shows an example of road location information broadcast from a traffic information center to a vehicle-mounted terminal;
FIG.10 is a flowchart showing the operation at a vehicle-mounted terminal of Embodiment 1 of the present invention;
FIG.11 shows a configuration of a traffic information broadcast system of Embodiment 2 of the present invention;
FIG.12 is a flowchart showing the operation at a vehicle-mounted terminal of Embodiment 2 of the present invention;
FIG.13 shows a configuration of a traffic information broadcast system of Embodiment 3 of the present invention; and
FIG.14 is a flowchart showing the operation at a vehicle-mounted terminal of Embodiment 3 of the present invention.

### Best Mode for Carrying Out the Invention

Now, embodiments of the present invention will be described in detail with reference to drawings.

### (Embodiment 1)

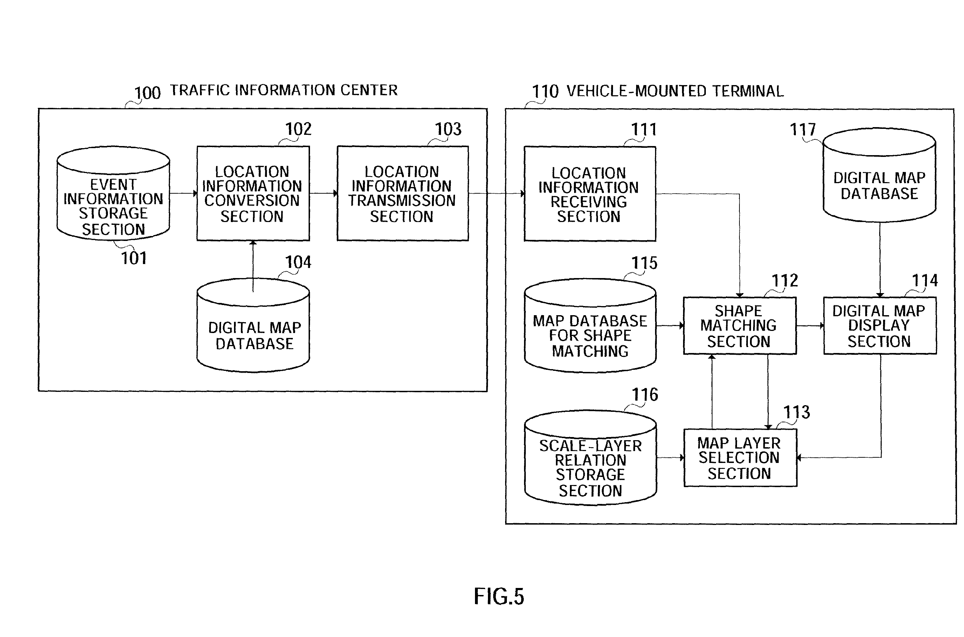

FIG.5 shows location information receiving apparatus and a traffic information broadcast system using a shape matching method according to Embodiment 1 of the present invention.

With reference to FIG. 5, a traffic information broadcast system includes traffic information center 100 that broadcasts location information indicating event locations such as traffic information and vehicle-mounted terminal 110 that may be a plurality of in-vehicle navigation devices (for convenience of explanation only one device is shown) used as a location information receiving apparatus according to Embodiment 1 of the present invention.

Traffic information center 100 includes event information storage section 101, location information conversion section 102, location information transmission section 103, and digital map database 104.

Event information storage section 101 stores the content of events, such as traffic accidents, road construction, traffic jams, rainfall, snowfall, traffic control and the like, and event locations such as roads and areas where the events occur as event information.

Location information conversion section 102 converts a prescribed length of a road segment including event locations contained in event information received from event information storage section 101 into road shape data with reference to digital map database 104 including nodes and links, and also extracts relative event location information within a road segment to combine all the data into road location information.

Location information transmission section 103 transmits road location information from location information conversion section 102 and broadcasts the information to vehicle-mounted terminal 110.

Digital map database 104 stores digital map data indicating roads, rivers, bridges, and buildings in the form of nodes "points" and links "line segments."

Vehicle-mounted terminal 110 includes location information receiving section 111, shape matching section 112, map layer selection section 113, digital map display section 114, map database for shape matching 115, scale-layer relation storage section 116 and digital map database 117.

Location information receiving section 111 receives location information from traffic information center 100.

Shape matching section 112 passes the process to map layer selection section 113 so as to select a layer to be used for shape matching from among layers of the map databases for shape matching.

Map layer selection section 113 obtains a display scale of a digital map that is or will appear on the screen from digital map display section 114, and refers to scale-layer relation storage section 116, and selects the layer of map database for shape matching 115 corresponding to the digital map display scale obtained from digital map display section 114.

Digital map display section 114 reads digital map data from digital map database 117 and displays the data on the screen.

Map database for shape matching 115 stores map data for shape matching such as road data and the like in the form of multiple layers (for convenience of explanation, three layers (layer A, layer B, and layer C) are taken).

Further, scale-layer relation storage section 116 stores the correspondence between the display scale of a digital map in digital map display section 114 and the layer of a map data for shape matching in map database for shape matching 115. Digital map database 117 stores digital map data in advance.

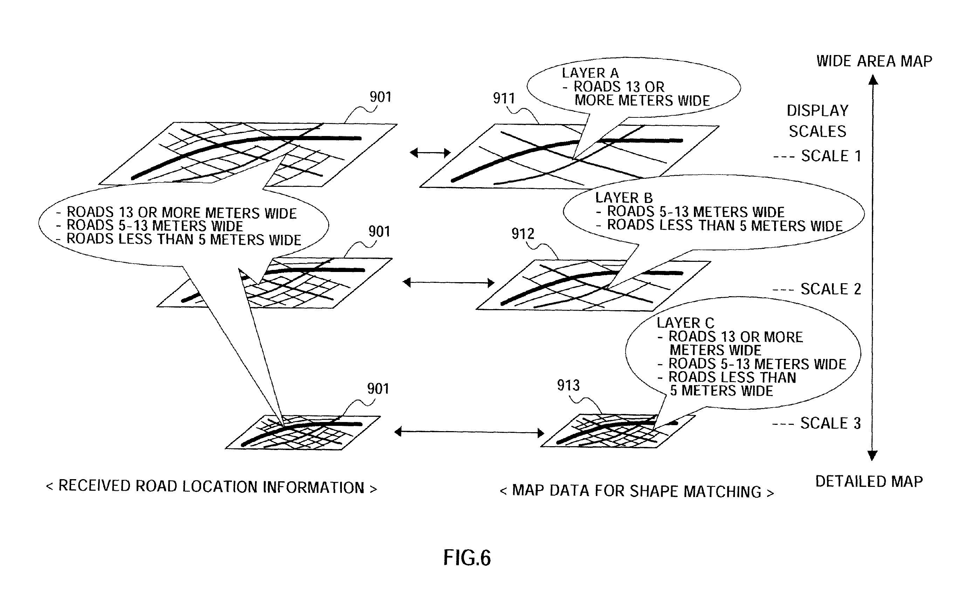

FIG.6 shows road location information received at vehicle-mounted terminal 110 and layered map data for shape matching stored in map database for shape matching 115.

As shown in FIG.6, in accordance with Embodiment 1 of the present invention, map database for shape matching 115 stores map data for shape matching such as road data and the like in three layers (layer A, layer B, and layer C) corresponding to display scales 1, 2, and 3 respectively. Map data for shape matching 911 of layer A corresponding to display scale 1 of a wide-area map stores, for example, nodes and links for roads 13 or more meters wide. Map data for shape matching 912 of layer B corresponding to display scale 2 of a middle-area map stores, for example, nodes and links for roads 5-13 meters wide and roads 13 or more meters wide. Map data for shape matching 913 of layer C corresponding to display scale 3 of a detailed map stores, for example, nodes and links for roads less than 5 meters wide, roads 5-13 meters wide and roads 13 or more meters wide.

Road location information 901 that is transmitted from traffic information center 100 and received at vehicle-mounted terminal 110 shows a case of layer C including all roads of less than 5 meters wide, roads 5-13 meters wide and roads 13 or more meters wide. FIG.6 shows road location information 901 into three layers each corresponding to display scales 1, 2, and 3 respectively.

Map database for shape matching 115 of Embodiment 1 of the present invention stores map data for shape matching of road data divided into three layers according to road widths, but the number of layers may be more than or less than tree, and data may be layered according to road types in place of road widths. More specifically, layer A may store nodes and links indicating national roads, main prefectural roads, roads having optical beacons positioned as a road location information collection and receiving apparatus at the initiative of Japanese police and other major roads, layer B may include nodes and links indicating prefectural roads, municipal roads and other roads shown in a 1:100000 scale map, and layer C may store nodes and links indicating roads shown in a 1:50000000 scale map.

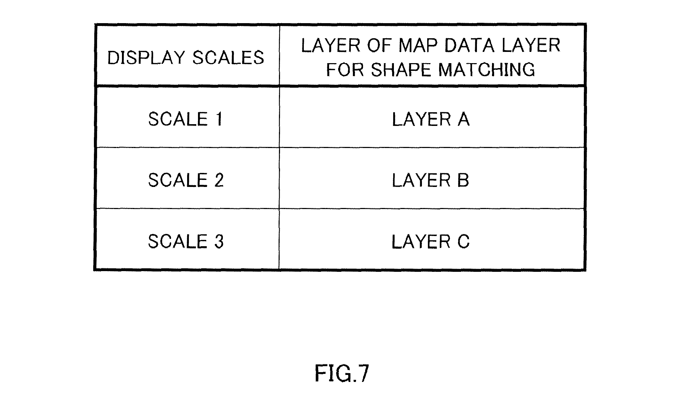

FIG.7 shows an example of data stored in scale-layer relation storage section 116. Scale layer relation storage section 116 stores the layers of map database for shape matching 115 corresponding to the display scales, and in this embodiment, scale 1 corresponds to layer A, scale 2 corresponds to layer B, and scale 3 corresponds to layer C.

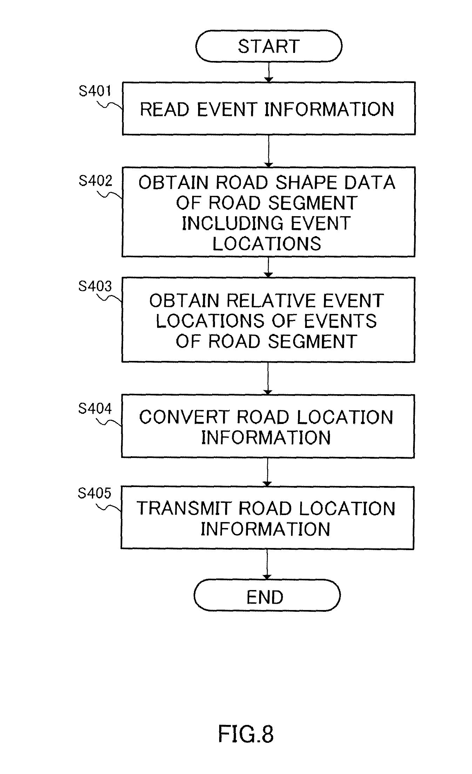

Next, a shape matching method that is the operation of this embodiment will be described in detail. FIG.8 is a flowchart showing the operation at traffic information center 100 that broadcasts road location information.

In traffic information center 100, first, location information conversion section 102 reads event information from event information storage section 101 where event information such as traffic accidents, road constructions, traffic jams, rainfall, snowfall, traffic control and the like are stored (S401) and generates road shape data composed of latitude and longitude strings indicating a road segment with a specified length (S402).

Next, upon obtaining relative location information indicating event locations within the road segment (S403), location information conversion section 102 converts the relative location to road shape data indicating road shapes and the likes from nodes and links stored in digital map database 104, and then, outputs data to location information transmission section 103 (S404).

Location information transmission section 103 then transmits the road location information received from location information conversion section 102 to vehicle-mounted terminal 110 (S405). Then the traffic information center 100 terminates processing.

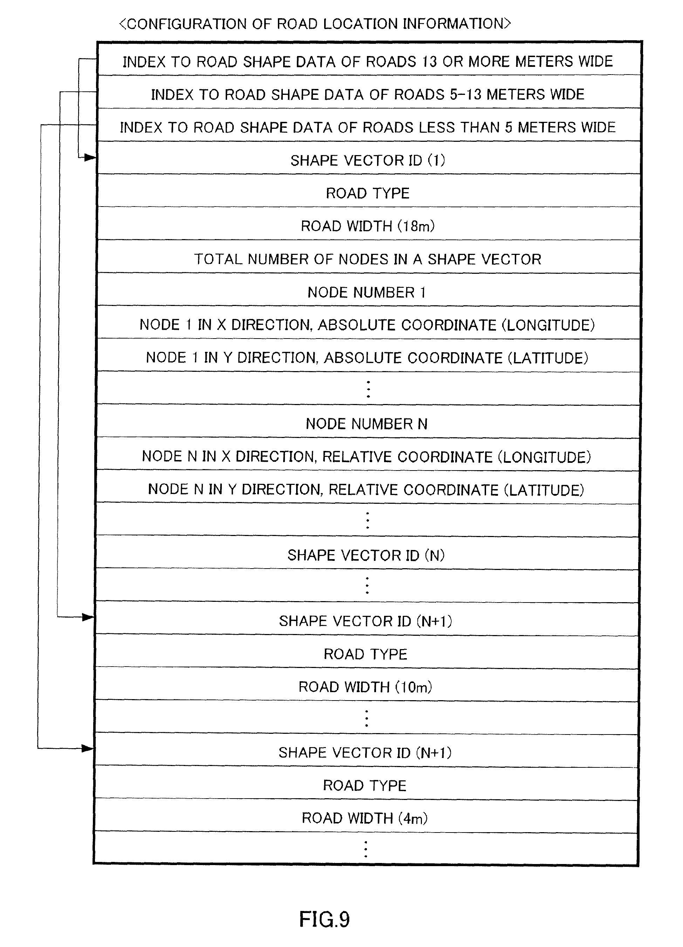

FIG.9 shows an example of road location information transmitted from traffic information center 100 to vehicle-mounted terminal 110.

FIG.9 shows an example of road location information. With reference to FIG. 9, a transmission flame for layer C includes all roads having roads less than 5 meters wide, roads 5-13 meters wide and roads 13 or more meters wide.

More specifically, this transmission flame starts with road indexes according to the important index out of roads to be transmitted such as, "index to road shape matching data of road 13 or more meters wide," "index to road shape matching data of road 5-13 meters wide," and "index to road shape matching data of road less than 5 meters wide."

The road indexes are followed by road shape data that is sequenced according to the importance starting with "shape matching data of roads 13 or more meters wide, " "shape matching data of roads 5-13 meters wide, " and "shape matching data of roads less than 5 meters wide."

With reference to FIG.9, a road shape data item for roads 13 or more meters wide starts with shape vector ID (1) and ends with shape vector ID (n), wherein between the two entries are road type, road width (18m), number of nodes in a shape vector, node number 1, node 1 in x direction, absolute coordinate (longitude), node 1 in y direction absolute coordinate (latitude), ---, node number n, node n in x direction, relative coordinate (longitude), node n in y direction, and relative coordinate (latitude). A road shape data for roads 5-13 meters wide starts with shape vector ID (n+1) and ends with shape vector ID (m), wherein between the two entries are road type, road width (10 m), and the like. A road shape data for roads less than 5 meters wide starts with shape vector ID (m+1) followed by road type, road width (4 m), and the like.

As described above, transmission flame stores road location information that is transmitted from traffic information center 100 to vehicle-mounted terminal 110. The transmission flame starts with indexes for road shape data sequenced according to the importance, which are followed by road shape data items that are also sequenced according to the importance. A transmission flame starts with indexes followed by road shape data. Indexes and road shape data are sequenced according to the importance, enabling vehicle-mounted terminal 110 to receive road location information starting with indexes followed by road shape data sequenced according to the importance.

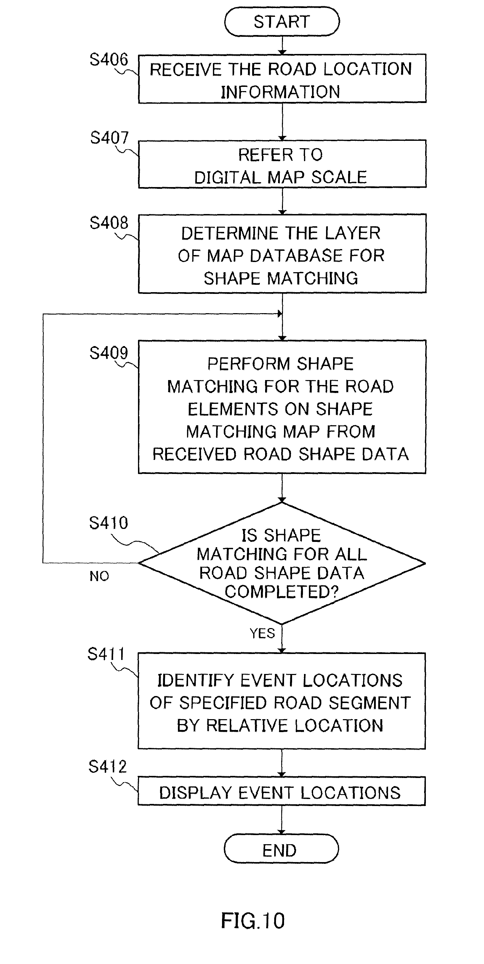

FIG.10 is a flowchart showing a shape matching operation at a vehicle-mounted terminal that receives road location information from traffic information center 100.

In vehicle-mounted terminal 110, location information receiving section 111 receives road location information from traffic information center 100 and passes the received road location information to shape matching section 112 (S406).

Shape matching section 112 passes the process to map layer selection section 113, which then obtains the display scale of a digital map that is or will appear on the screen from digital map display section 114 (S407).

Then, map layer selection section 113 refers to scale-layer relation storage section 116, selects the layer of map database for shape matching 115 corresponding to the display scale of a digital map obtained from digital map display section 114, and returns the selected layer to shape matching section 112 (S408). For example, if map layer selection section 113 obtains "Scale 1" from digital map display section 114 in step S407, then map layer selection section 113 selects "layer A" of map database for shape matching 115 by referring to scale-layer relation storage section 116 and outputs the selected layer to shape matching section 112.

When the layer of map database for shape matching 115 is selected, and the selected layer is outputted to shape matching section 112, shape matching section 112 performs shape matching processing (S409) using road shape data out of the received road location information, and the layer of map database for shape matching 115, based on the display scale and the shape matching range calculated from display area of digital map display section 114 or a prescribed range such as Secondary Area Partitions of Grid Square area (approximately 10km²). In short, shape matching processing is performed between the road shape data composed of road elements of the nodes and links included in the received road location information, and the road elements on map data for shape matching.

Shape matching section 112 judges whether or not shape matching processing for all road shape data stored in the received road location information is executed (S410). If not (S410 "No"), the process is returned to S409. If completed (S410 "Yes"), shape matching section 112 identifies event locations such as traffic accidents within the road segment specified by shape matching processing (S411), displays the event locations on digital map display section 114 (S412), and terminates processing.

According to Embodiment 1, shape matching section 112 in vehicle-mounted terminal 110 receives road location information including event locations from traffic information center 100 to perform shape matching. At this time, map layer selection section 113 selects a pair of scale and layer wherein the scale is obtained from digital map display section 114 and the layer is obtained from map database for shape matching 115, thus eliminating the need for movement between layers of shape matching data, increasing the shape matching speed and displaying event locations speedily.

In addition, shape matching section 112 may store the road shape data received from traffic information center 100 for a specific period of time, regardless of whether the event locations can be displayed on a digital map of digital map display section 114 or not, for the time period until the user clears the data or new road location information is broadcast from traffic information center 100. When the display scale of a digital map is changed at digital map display section 114, digital map display section 114 may retrieve the stored shape data, perform shape matching, and display event locations on the digital map appearing on the screen of digital map display section 114.

For example, when the road location information is received from traffic information center 100, the event location indicates roads less than 5 meters wide and the display scale 1 is selected at digital map display section 114 in traffic information center 100. In this case, shape matching fails and event locations are not displayed on the digital map appearing at digital map display section 114. Digital map display section 114 may change the display scale to scale 3 during the time period until the same road location information is repeatedly broadcast from traffic information center 100. In this case, shape matching section 112 reads shape matching data of layer C corresponding to scale 3 and performs shape matching for the stored road location information of event locations indicating roads less than 5 meters wide, and can display event locations on the digital map. This enables a speedy display of event locations to be adapted to the display scale of a digital map in digital map display section 114. The same applies to Embodiment 3 of the present invention that determines the shape matching layer with reference to the digital map scale.

In accordance with the present invention, the scale of a digital map is used to determine the layer for shape matching, but the present invention is not limited to this, and road location information may include map scales or shape matching layers corresponding to road location information. In this way, with vehicle-mounted terminal 110, when road location information is received from traffic information center 100, the map scale or shape matching layer corresponding to event locations included in road location information can be automatically selected, so that it is possible to execute shape matching more reliably and speedily. The same applies to Embodiment 3 of the present invention.

Further, in this embodiment, road location information including road shape data has been described in conjunction of an example of location information that includes shape data indicating locations on a digital map, but the present invention is not limited to this, and other than location information including road shape data, any shape data that can be represented by shape data on a digital map, such as buildings, rivers, mountains, and agricultural fields are included. The same applies to Embodiments 2 and 3 which will be described below.

Further, in this embodiment, vehicle-mounted terminal 110 includes databases such as map database for shape matching 115 and digital map database 117, but it is not always necessary for vehicle-mounted terminal 110 to be provided with them. For example, database may be provided at a different apparatus other than vehicle-mounted terminal 110, a recording media such as CDs and DVDs, and also a server through a network, and data may be used by download or reception. The same applies to Embodiments 2 and 3 which will be described below.

In this embodiment, traffic information center 100 and vehicle-mounted terminal 110 are configured as hardware devices as shown in block diagrams, but the present invention is not limited to this, and traffic information center 100 and vehicle-mounted terminal 110 may be provided by computer programs that may perform those functions through information processing sections such as computer processing units (CPUs). These programs may be installed for each device from recording media such as CDs or may be downloaded for each device through a network. The same applies to Embodiments 2 and 3 which will be described below.

### (Embodiment 2)

Embodiment 2 of the present invention compares the number of road elements in map data for shape matching is compared with the number of elements in road shape data contained in the received road location information. Values related to shape matching load are calculated for each road element to determine the importance of the nodes and links based on the road elements having whichever smaller value; shape matching is limited to the nodes and links having the same importance. This eliminates redundant matching operations and increases the shape matching speed.

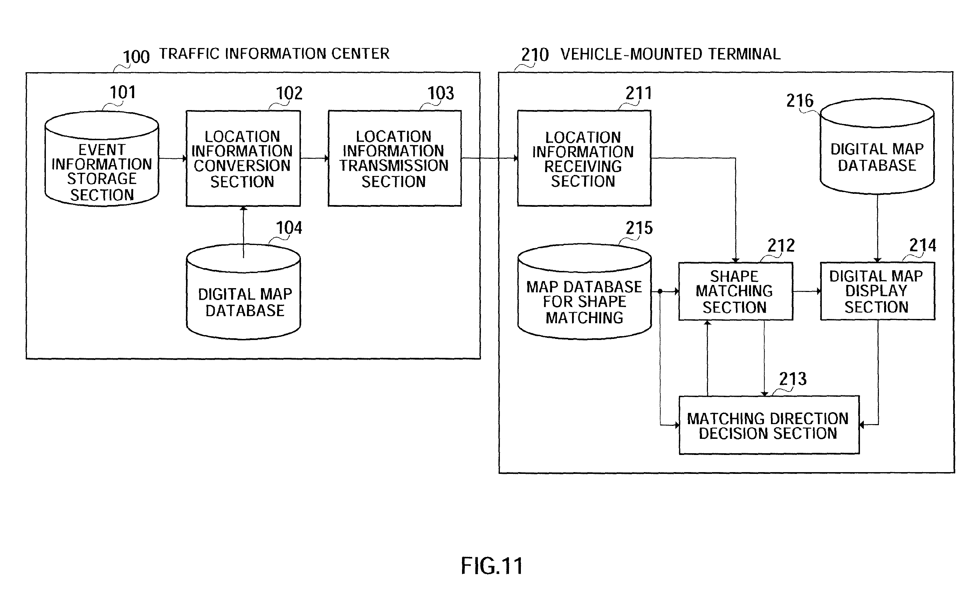

FIG.11 shows location information receiving apparatus and a traffic information broadcast system using a shape matching method according to Embodiment 2 of the present invention.

In FIG.11, a traffic information broadcast system of Embodiment 2 of the present invention includes traffic information center 100 and vehicle-mounted terminal 110 that may be a plurality of in-vehicle navigation devices (for convenience of explanation only one device is shown) used as a location information receiving apparatus according to Embodiment 2 of the present invention.

Vehicle-mounted terminal 210 of Embodiment 2 of the present invention includes location information receiving section 211, shape matching section 212, matching direction decision section 213, digital map display section 214, map database for shape matching 215 and digital map database 216.

Matching direction decision section 213 uses a display scale and a display area of digital map display section 214 to calculate a specified range such as a shape matching range or the Secondary Area Partitions of Grid Square (approximately 10km²) . The specified range inmap database for shape matching 215 is searched to find the number of road elements m therein. Road shape data in the received road location information is searched to find the number of road elements n therein. Road elements m and n are compared to determine the data having a smaller value. Matching is performed in the direction from data having a smaller value to data having a larger value.

Next, the operation at vehicle-mounted terminal 210 end will be described with reference to drawings. The operation at traffic information center 100 is the same as described in FIG.8, and description thereof will be omitted.

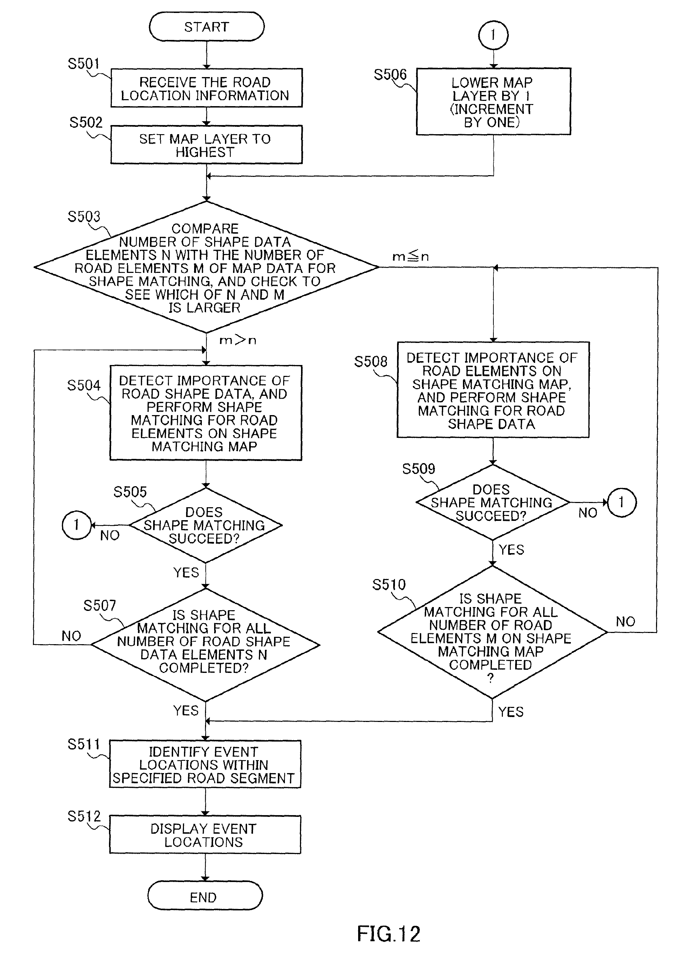

FIG.12 is a flowchart showing the operation at vehicle-mounted terminal 210 end that receives road location information from traffic information center 100.

In vehicle-mounted terminal 210, location information receiving section 211 receives road location information from traffic information center 100 and passes the process to shape matching section 212 (S 501).

Shape matching section 212 sets the layer of map database for shape matching 215 to the highest layer (S502), and passes the process to matching direction decision section 213.

In order to determine the direction of performing shape matching, matching direction decision section 213 first compares the size of the value related to load of shape matching processing between map data for shape matching and road shape data included in the road location information received from traffic information center 100.

In short, matching direction decision section 213 calculates the specified range such as a shape matching range or Secondary Area Partitions of Grid Square (approximately 10km²) using the display scale of digital map display section 214 and the display area of digital map display section 214, calculates the number of road elements m in the specified range in map data and the number of road elements n in the specified range in road shape data in the received road location information, and the numbers of elements m and n are compared (S503). As a result of comparison, matching direction is determined to carry out a shape matching to data having a larger number of road elements from data having a smaller number of road elements in the prescribed range. Here, as the values related to shape matching load for comparison, use the number of road elements that is the number of intersections in the specified range and the number of road segments delimited by intersections is used. However, either of the total road length in the specified range and the data size in the specified range, or the combination thereof may be selected for comparison. This enables objects for comparison to select adaptively, and it is possible to select data adaptively with small value related to load of shape matching processing.

As a result of comparison, if the number of road elements m in map data for shape matching is larger than the number of shape data elements n in the road location information received from traffic information center 100 (S503 "m>n"), the number of shape data elements n in the received road location information is smaller. Therefore, the importance of road elements (links and nodes) that are matching elements in road location information received from traffic information center 100 is detected, shape matching is limited to the road elements having the specified importance, any road elements having different importance, and then shape matching is performed for road elements in map data for shape matching (S504). This can eliminate shape matching for any road elements having different importance, thus reducing redundant shape matching.

Here, the importance of road elements that are matching elements, road types, road widths, and the combination thereof may be used, and may be corresponded with road widths and road types used as criteria for classifyingmap data for shape matching into layers. This may reduce the redundant matching processing more reliably.

In the case of m>n, it indicates that the number of road elements m included in the shape matching range of map database for shape matching 215 is larger than the number of shape data elements n in the road location information received from traffic information center 100, so when the display scale indicates a detailed map, this case may often occur in layer C as shown in FIG.6.

Next, the process moves to step 505 (S505) for checking to see if shape matching succeeds. If shape matching fails (S505 "No"), the map layer for shape matching is lowered by one (S506) and control is returned to S503 to repeat comparison of elements m and n. For example, with reference to FIG. 6, when layer A (highest layer) of shape matching data was used for shape matching, then the map layer is lowered by one to layer B and comparison is performed for elements m and n using shape matching data of layer B.

If shape matching succeeds (S505 "Yes"), the process moves to S507 for checking to see if shape matching for all the road data on a map of layer C is executed. If the process has completed for all the number of road shape data elements n in the received road location information (S505 "Yes"), then the process moves to S511. If not (S507 "No"), then the process is returned to S504.

On the other hand, as a result of comparison of the number of elements m and n in step 503, if the number of road elements m in map data for shape matching is less than or equal to the number of road shape data elements n in the road location information received from traffic information center 100 (at S503 "m≦n"), the number of road elements m in map data for shape matching is smaller than n. Therefore, the importance of each road element (link and node) in map data for shape matching is detected, Shape matching is limited to road elements having the same importance as the detected importance, the road elements having different importance are ignored, and then shape matching is performed for the road elements in road shape data in the received road location information (S508). This may also eliminate the need for shape matching for road elements having different importance, thus reducing the redundant matching operations.

In the case of m≦n, it indicates that when road shape data in the received road location information is examined, the number of road elements n in the shape matching range is larger than the number of road elements m in the shape matching range of map database for shape matching 215, and the display scale indicates a wide-area map, which may often occur in layer A corresponding to scale 1 as shown in FIG.6.

Next, in this case, the process moves to S509 for checking to see if shape matching succeeds. If shape matching fails (S509 "No"), the map layer for shape matching is lowered by one (S506) and the process is returned to S503 for comparing elements m and n.

If shape matching succeeds (S509 "Yes"), the process moves to S510 for checking to see if shape matching for all the road shape data in the received road location information for the number of elements m of road data on the map of the layer is executed. If shape matching has completed for all the number of elements n of road data on the map of the layer (S510 "Yes"), then the process moves to S511. If not (S510 "No"), then the process is returned to S508.

Then, the process moves to S511 for identifying event locations within the specified road segment by relative location information as described above. Then the process moves to S512 for displaying event locations on digital map display section 214 and terminate processing.

As described above, according to Embodiment 2 of the present invention, when vehicle-mounted terminal 210 receives road location information including event locations from traffic information center 100. Then, matching direction decision section 213 compares values such as the number of road elements related to shape matching load in map data for shape matching with values such as the number of road elements in road shape data contained in the received road location information. Then, whichever smaller value is determined. Shape matching is limited to the nodes and links having the same importance. This can eliminate the need for shape matching for any road elements having different importance, thus reducing redundant shape matching operations. This can also increase the shape matching speed and display event locations more speedily.

### (Embodiment 3)

Embodiment 3 of the present invention combines said Embodiments 1 and 2.

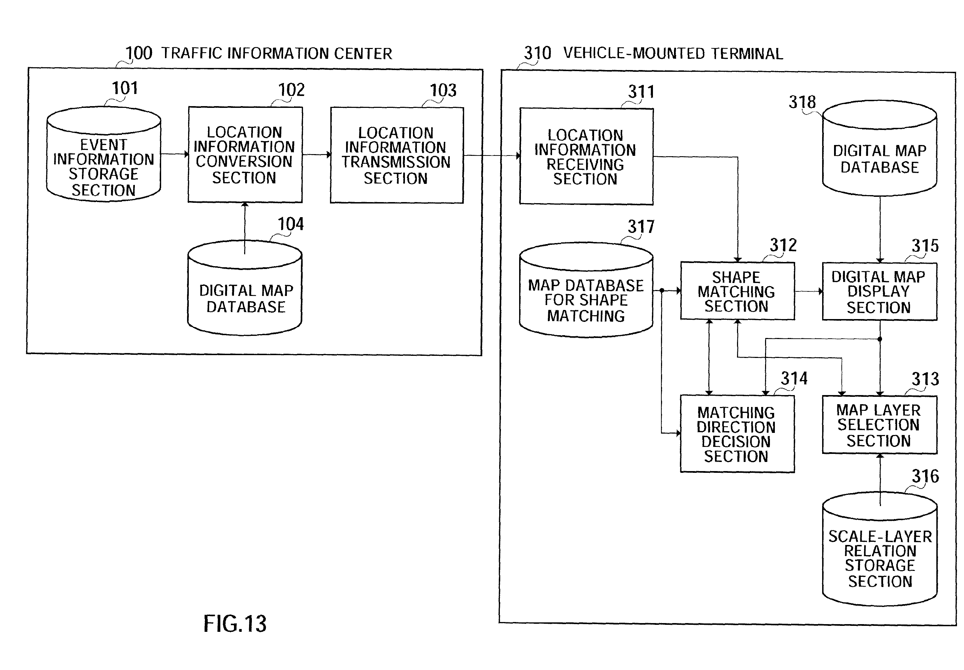

FIG. 13 shows a configuration of a traffic information broadcast system using a location information receiving apparatus and a shape matching method in accordance with Embodiment 3 of the present invention.

In FIG. 13, a traffic information broadcast system of Embodiment 3 of the present invention includes a traffic information center 100 as shown in Embodiment 1 and vehicle-mounted terminal 310 that may be a plurality of in-vehicle navigation devices (for convenience of explanation only one device is shown) used as a location information receiving apparatus according to Embodiment 3 of the present invention.

Vehicle-mounted terminal 310 includes location information receiving section 311, shape matching section 312, map layer selection section 313, matching direction decision section 314, digital map display section 315, map database for shape matching 115, scale-layer relation storage section 316, map database for shape matching 317, and digital map database 318.

Next, with reference to drawings, the operation at vehicle-mounted terminal 310 will be described. The operation at traffic information center 100 is the same as shown in FIG.8, and the description thereof will be omitted.

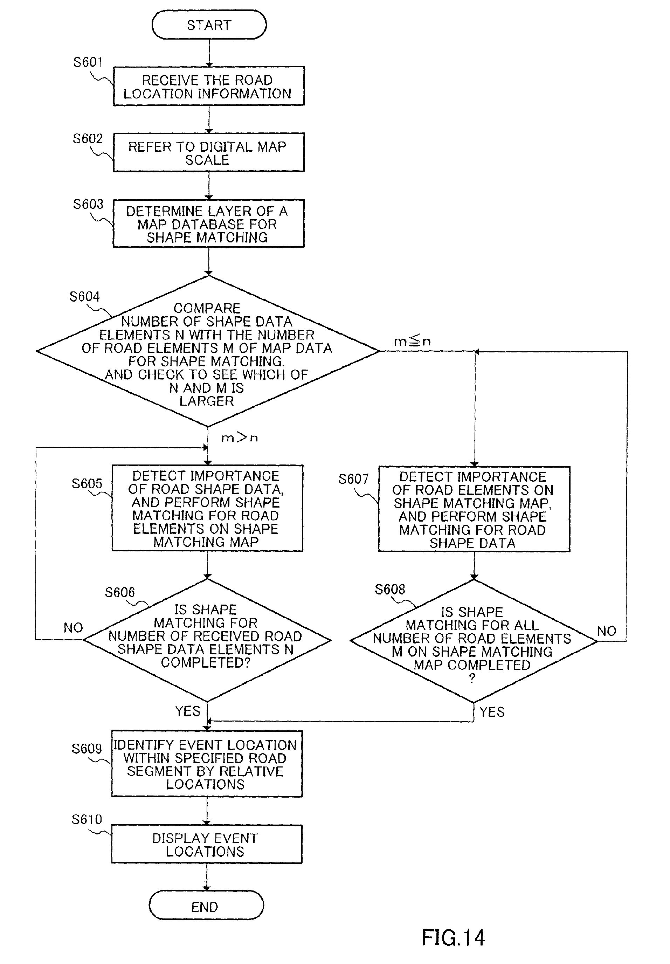

FIG.14 is a flowchart showing the operation at vehicle-mounted terminal 310 of Embodiment 3 of the present invention, which receives location information from traffic information center 100.

In vehicle-mounted terminal 310, location information receiving section 311 receives road location information from traffic information center 100, passes the received road location information to shape matching section 312 (S601).

Shape matching section 312 receives road location information and then passes the process to map layer selection section 313 that selects the layer to be used for shape matching from among the layers in the map database for shape matching. Then, as with Embodiment 1, map layer selection section 313 obtains the display scale of a digital map, which is or will appear on the screen, from digital map display section 315 (S602), selects the layer of map database for shape matching 317 corresponding to the display scale in digital map display section 315 with reference to scale layer relation storage (S603), and transmits the layer to shape matching section 312.

Then, as with Embodiment 1, when the layer of map database for shape matching 317 is determined and the layer is transmitted to matching direction decision section 314, in order to determines the direction of performing shape matching using map data for shape matching of the selected layer, matching direction decision section 314 compares the values related to load of shape matching processing as with Embodiment 2, between shape matching map data of the layer and road shape data included in road location information received from traffic information center 100. More specifically, matching direction decision section 314 calculates the shape matching range from a display scale and a display area of digital map display section 315 or calculates a specified range such as Secondary Area Partitions of Grid Square (approximately 10km²), and then calculates the number of road elements m in the shape matching range for the determined layer, and the number of road elements n in the shape matching range for the road shape data contained in the received road location information, and compares the size of the number of elements m and n (S604). In this embodiment, as described in Embodiment 2, not only the number of road elements, namely the number of intersections in the specified range and the number of road segments delimited by intersections, but also either the total road length in said specified range or the data size in said specified range or the combination thereof may be used as the values related to shape matching load for comparison. This assures an adaptive selection of objects for comparison, thus allowing an adaptive selection of value whichever smaller related to shape matching load.

As a result of comparison between the number of the road elements m and n, if the number of road elements m in the map data for shape matching is larger than the number of shape data elements n in the road location information received from traffic information center 100 (S604 "m>n"), the importance of road elements (links and nodes) that is matching elements contained in the road location information received from traffic information center 100 is detected, shape matching is limited to the road elements having the specified importance, namely any road elements having different importance are ignored, and shape matching processing is performed for the road elements of map data for shape matching (S605). This can eliminate the need for shape matching for any road elements having different importance, thus reducing redundant shape matching operations.

Next, the process moves to step S606 for checking to see if shape matching succeeds for road data on a map of layer C for the number of elements n in road shape data contained in the received road location information (S606). If not (S606 "No"), the process is returned to S605, which continues shape matching processing with road data on a map corresponding of layer C for the number of elements n in road shape data contained in the received road location information. If complete (S606 "Yes"), the process moves to S609.

On the other hand, as a result of comparison of number of elements m and n, if the number of road elements m in map data for shape matching is less than or equal to the number of road shape data elements n in the road location information received from traffic information center 100 (S604 "m≦n"), it indicates that the number of road elements m in the map data for shape matching is smaller than n. Therefore, the importance of each road element (link and node) in the map data for shape matching is detected, shape matching is limited to road elements having the same importance as the detected importance, the road elements having different importance are ignored, and shape matching is performed for the road elements in the road shape data in the received road location information (S607). This may also eliminate the need for any shape matching for road elements having different importance, thus reducing the redundant matching operations.

Next, the process moves to S608 for checking to see if shape matching succeeds for road shape data contained in the received road location information for the number of elements m of road elements on a map of layer A. If not (S608 "No"), the process is returned to S607, which continues shape matching with the road shape data contained in the received road location information for the number of elements m in the road data on a map of layer A. If complete (S608 "Yes"), the process moves to S609.

Then, the process moves to S609, event locations within the specified road segment are identified by relative location information. Then the process moves to S610 for displaying event locations on digital map display section 315 and terminates processing.

As described above, according to Embodiment 3 of the present invention, vehicle-mounted terminal 310 determines the layer of map data for shape matching according to the display scale of a digital map as described in Embodiment 1. This eliminates the need for movement between layers of map data for shape matching. As described in Embodiment 2, values related to shape matching load in map data for shape matching are compared with the values of road shape data contained in the received road location information. Then, whichever smaller value is determined as the importance of the nodes and links. Shape matching is limited to the nodes and links having the same importance. This eliminates the need for shape matching for any road elements having different importance, thus reducing redundant shape matching operations. This can also increase the shape matching speed and display event locations more speedily.

This specification is based on Japanese Patent Application No.2004-156761, filedonMay26, 2004, entire content of which is expressly incorporated herein by reference.

### Industrial Applicability

A location information receiving apparatus and a shape matching method in accordance with the present invention provide an adequate and speedy communication of event information such as traffic accidents, road construction, traffic jams, and police control, and location-related information on a digital map including point of interest (POI) places such as restaurants and parking lots. Vehicle-mounted terminals such as in-vehicle navigation systems and mobile terminals such as cell phones, personal digital assistances (PDAs) and personal computers are useful as systems for receiving location information generated by a traffic information center in a traffic control system that collects, generates, and broadcasts traffic information.

## Claims

1. A location information receiving apparatus, which receives shape data indicating locations on a digital map as location information, identifies said locations by performing shape matching between said shape data and map data for shape matching composed of a plurality of layers, and displays the locations on a digital map display section, comprising:
a scale-layer relation storage section for storing the correspondence between a display scale of the digital map to appear on said digital map display section and said layer of map data for shape matching;
a map layer selection section for selecting the layer of saidmap data for shape matching according to the display scale of the digital map to appear on said digital map display section; and
a shape matching section for performing shape matching using said map data for shape matching of the selected layer and said shape data.

2. The location information receiving apparatus according to claim 1, further comprising a matching direction decision section that compares a number of road elements related to load of said shape matching processing in said map data for shape matching of the selected layer with a number of elements in said received shape data, and determines a direction of executing shape matching from data having a smaller number of elements to data having a larger number of elements,
wherein said shape matching section detects importance of matching elements contained in said data having a smaller number of elements, and performs shape matching in said determined direction for said matching elements having the detected importance.

3. The location information receiving apparatus according to claim 2, wherein
as the importance of said matching element, at least one of the road types, road widths, and road numbers is used.

4. The location information receiving apparatus according to claim 2, wherein
as the number of elements related to load of said shape matching, at least one of the number of road segments delimited by intersections, total road lengths, and data sizes is used.

5. A shape matching method of receiving shape data indicating locations on a digital map, performing shape matching between said shape data and map data for shape matching composed of a plurality of layers and identifying said locations, comprising the steps of:
selecting the layer of map data for shape matching to be used for shape matching according to a display scale; and;
performing shape matching using the selected layer of said map data for shape matching and said shape data.

6. The shape matching method according to claim 5, further comprising the steps of:
determining the direction of executing shape matching from data having a smaller number of said elements to data having a larger number of elements by comparing the number of elements related to load of said shape matching processing for map data for shape matching of said selected layer with the number of elements in said received shape data; and
detecting the importance of matching elements contained in data having a smaller number of said elements and performing shape matching in said direction for said matching elements having the detected importance.

7. A program for executing the shape matching method according to claim 5 in a computer.
